# EUROPEAN PATENT APPLICATION

(11) **EP 4 851 929 A1**
(43) Date of publication of application: **09.12.2026**
(21) Application number: 26182716.6
(22) Date of filing: 02.06.2026
(51) Int. Cl.: G06T 11/00

(54) **CONTROLLABLE IMAGE SYNTHESIS WITH OBJECT PRESERVATION**

(30) Priority: 02.06.2025 US 202519225471
(71) Applicant: Typeface Inc., Palo Alto, California 94306-1618 (US)
(72) Inventor: SHARMA, Prasen Kumar, California, 94306-1618 (US); SRIVASTAVA, Siddharth, California, 94306-1618 (US); MATIYALI, Neeraj, California, 94306-1618 (US); SHARMA, Gaurav, California, 94306-1618 (US)
(74) Representative: Mathys & Squire

(57) **Abstract**

A solution is presented for controlled image synthesis that addresses key limitations in object preservation and semantic consistency in text-to-image generation and addresses the problem of generating images where products are accurately preserved and seamlessly integrated into their surroundings. **In** one aspect, an N-channel ControlNet integrates object preservation with size and placement agnosticism, color and detail retention, and artifact elimination; high-resolution, semantically consistent backgrounds with accurate shadows, lighting, and prompt adherence; and explicit user control over background layouts and lighting conditions. The framework includes object preservation and background guidance modules, enforcing lighting consistency and a high-frequency overlay module to retain fine details while mitigating unwanted artifacts. A machine learning-based approach enhances the capabilities of diffusion models by introducing multiple control channels, advanced training methodologies, and post-processing techniques. The results are improved product preservation, harmonization, and realism in generated images.

## Description

### TECHNICAL FIELD

The present disclosure relates to computer-implemented image generation technologies, specifically to methods and systems for controllable image synthesis with improved object preservation and smooth integration into generated backgrounds.

### BACKGROUND

A problem arises when generating images that include products that are accurately preserved and seamlessly integrated into their surroundings. The problem is particularly relevant to applications where users aim to create advertisements or visual content by placing a product on a canvas and generating a background based on a textual prompt.

Some symptoms of the problem include distortion of the product during image generation, the introduction of artifacts, and a lack of adherence to the provided prompt. For example, when generating an image of a Coke can, artifacts such as caps or straws may appear, or the text on the product may become distorted. Additionally, the generated images often fail to achieve clarity or realism, with the product appearing as though it has been pasted onto the background rather than naturally integrated. Shadows, blending, and harmonization around the product are frequently inaccurate, further reducing the realism of the output.

In some cases, the problem relates to machine learning models, particularly diffusion models, used for image generation. These models rely on inputs such as the product image, a mask, and a textual prompt. The issue is exacerbated by the limitations of existing methods, which often use single-channel inputs, such as depth maps or edge maps, and cannot incorporate multiple control features. The problem is also influenced by the quality of training datasets, which may not adequately represent real-world conditions or provide sufficient diversity in lighting, depth, and environmental contexts.

Distorted products, poor harmonization, and low-quality outputs reduce the usability of the generated images for advertising and other visual applications. Failure to address the problem results in outputs that do not meet user expectations, limiting the effectiveness of the image generation process and reducing its applicability in commercial and creative contexts.

Existing solutions have attempted to address the problem by using standard diffusion models and single-channel control features. However, these approaches have been only partially successful. They fail to preserve product details consistently and do not provide sufficient control over the generated environment. The need for a more robust solution that addresses these limitations remains.

### BRIEF DESCRIPTION OF THE DRAWINGS

Various appended drawings illustrate examples of the present disclosure and cannot be considered limiting its scope.
**Figure 1** is a user interface (UI) for a canvas tool to generate multimodal content, according to some example embodiments.
**Figure 2** shows an image created by a Generative Artificial Intelligence (GAI) tool, according to some example embodiments.
**Figure 3** is a flowchart of a method for generating an image using a generative artificial intelligence (AI) tool while preserving specific assets and integrating them into the generated image, according to some examples.
**Figure 4** shows a system for controlled image synthesis that integrates multiple components to generate high-quality images with preserved objects and enhanced user control over scene composition.
**Figure 5A** shows a background guidance module that processes a reference image 502 to generate a structural representation of the background layout B 412, according to some examples.
**Figure 5B** shows a lighting map estimation process used in the context of controllable image synthesis with object preservation, according to some examples.
**Figure 6** shows a system for generating high-quality images with object preservation and enhanced control over scene composition, according to some examples.
**Figure 7** shows a qualitative comparison of image synthesis results generated by multiple solutions, according to some examples.
**Figure 8** shows an example of processing multiple objects and generating photorealistic scenes with variations in size, placement, and context, according to some examples.
**Figure 9** shows the application of the high-frequency overlay module to recover complex text and fine details in generated images.
**Figure 10** shows an example method for controllable image synthesis, demonstrating the integration of a foreground object into a generated scene with and without background control, according to some examples.
**Figure 11** shows the impact of explicit lighting direction control using a gradient map on the generation of synthesized images, demonstrating the ability of the proposed method to produce consistent illumination and shadow effects.
**Figure 12** illustrates the results of the process to maintain natural aesthetics, such as lighting, shadows, and reflections, across multiple generations of synthesized images, according to some examples.
**Figure 13** illustrates the use of a Generative Artificial Intelligence (GAI) model to generate new content, according to some examples.
**Figure 14** is a flowchart of a method for generating images with controllable image synthesis and object preservation, according to some examples.
**Figure 15** is a block diagram illustrating an example of a machine upon by which one or more process examples described herein may be implemented or controlled.

### DETAILED DESCRIPTION

Example methods, systems, and computer programs described herein are directed at the generation of images with controllable image synthesis and object preservation. Examples merely typify possible variations. Unless explicitly stated otherwise, components and functions are optional and may be combined or subdivided, and operations may vary in sequence or be combined or subdivided. The following description provides numerous specific details to provide a thorough understanding of examples. However, it will be evident to one skilled in the art that the present subject matter may be practiced without these specific details.

A system named Preserve Anything (PA) provides a solution for controlled image synthesis that addresses key limitations in object preservation and semantic consistency in text-to-image (T2I) generation. In some examples, PA employs an N-channel ControlNet that integrates (i) object preservation with size and placement agnosticism, color and detail retention, and artifact elimination, (ii) high-resolution, semantically consistent backgrounds with accurate shadows, lighting, and prompt adherence, and (iii) explicit user control over background layouts and lighting conditions. The PA framework includes object preservation and background guidance modules, enforcing lighting consistency and a high-frequency overlay module to retain fine details while mitigating unwanted artifacts.

The solution addresses the problem of generating images where products are accurately preserved and seamlessly integrated into their surroundings. The solution involves a machine learning-based approach that enhances the capabilities of diffusion models by introducing multiple control channels, advanced training methodologies, and post-processing techniques. The solution is designed to improve product preservation, harmonization, and realism in generated images.

Further, PA solution utilizes a foundational diffusion model, such as Stable Diffusion (SD) or Flux, in conjunction with ControlNet, which is used to distill features from the foundational model, allowing the addition of control features or conditions to guide the image generation process. Traditionally, control features in such models rely on single-channel inputs, such as depth maps or edge maps. PA introduces multiple control channels, including the RGB image of the product, a binary mask, and additional photometric properties such as lighting maps. The RGB image provides detailed color information about the product, while the binary mask, represented in black and white, identifies the product's location on the canvas. The lighting map, represented as a gradient, specifies the direction and intensity of the light source.

Further, PA incorporates a high-frequency overlay technique to address issues related to text distortion and edge blurriness in generated images. After the initial image generation, high-frequency components from the source product are extracted and overlaid onto the generated image using the product mask. This ensures that fine details, such as text and edges, are preserved. The high-frequency overlay technique is applied as a post-processing step to enhance the fidelity of the generated product.

The training process for PA involves the use of a hybrid dataset comprising both synthetic and real-world images. Synthetic images are generated using 3D models of products placed in simulated environments created with EXR files. These files simulate 3D environments with adjustable lighting and camera positions, allowing for the generation of images under diverse environmental conditions. The synthetic dataset is designed to provide the network with an understanding of 3D properties, such as depth, lighting, and object appearance at varying camera angles and distances. The network is pre-trained on this synthetic dataset to learn these properties. Subsequently, the network is fine-tuned on a smaller subset of real-world images, which include product masks and real-world backgrounds. This two-step training process enables the network to combine the advantages of synthetic data diversity with the realism of real-world data.

In some examples, PA also includes the use of a visual language model (VLM) (e.g., GPT-4) to generate captions for real-world images. These captions describe the image content and are used as prompts during training. To prevent overfitting, multiple captions of varying lengths and descriptions are generated for each image. This ensures that the network learns the semantics of objects and their relationships within the image. Additional annotations, such as lighting direction, camera orientation, and spatial relationships between objects, are included to enhance the network's understanding of the scene.

Further, PA supports the generation of images that embed multiple predefined items (e.g., product images) by allowing the network to ingest multiple objects and their corresponding masks. FA also allows for the introduction of additional control channels to specify photometric properties, such as shadows, reflections, and material types. For instance, a metallic texture can be introduced through a dedicated channel, enabling the network to respect and apply such properties.

PA provides the network with detailed and diverse inputs, enabling it to generate images that are both realistic and well-integrated. The use of multiple control channels ensures that the product is accurately preserved, while the high-frequency overlay technique enhances the fidelity of fine details. The hybrid training process leverages the strengths of both synthetic and real-world data, allowing the network to learn 3D properties and real-world aesthetics.

The solution addresses several technical challenges, including product distortion, artifact introduction, and lack of harmonization in generated images. By incorporating multiple control channels and advanced training methodologies, PA ensures that the product is preserved and seamlessly integrated into the background. The result is improved product preservation, enhanced harmonization, and increased realism in generated images, reducing errors such as text distortion, edge blurriness, and artifact introduction.

### GLOSSARY OF TERMS

Some of the concepts used for the description of the solution are presented below.

A **background layout** is a structural representation of a scene that provides guidance for the composition of a generated image, derived from a reference image or specified by a user.

A **binary mask** is a black-and-white representation of an image that delineates the boundaries of an object, with white pixels indicating the object and black pixels indicating the background.

A **conditioning vector** is a numerical representation generated by encoding control features, used to guide a machine-learning model in the image generation process.

A **convolutional module** is a computational component, initialized with zero weights, that processes input features into a latent representation compatible with a machine-learning model.

A **control feature** is an input parameter, such as a foreground image, binary mask, background layout, or lighting map, used to guide the generation of a synthetic image.

A **diffusion model** is a machine-learning model configured to iteratively refine a latent representation of an image by removing noise, based on input conditions and prompts.

A **foreground image** is a visual input representing an object to be preserved and integrated into a generated scene.

A **high-frequency component** is a fine detail in an image, such as text, edges, or intricate patterns, characterized by rapid changes in intensity or color over small spatial areas.

A **high-frequency overlay module** is a post-processing component that reintegrates high-frequency details from a source image into a generated image to preserve fine details.

A **lighting map** is a gradient-based representation of the direction and intensity of a light source, used to ensure consistent illumination and shadow effects in a generated image.

A **machine-learning model** is a computational framework, such as a diffusion model, configured to generate synthetic images based on input conditions and textual prompts.

A **result image** is a synthesized image generated by the method, which integrates a preserved object into a scene with consistent lighting, shadows, and blending.

A **textual prompt** is a user-provided description of a desired scene, used to guide the generation of a synthetic image.

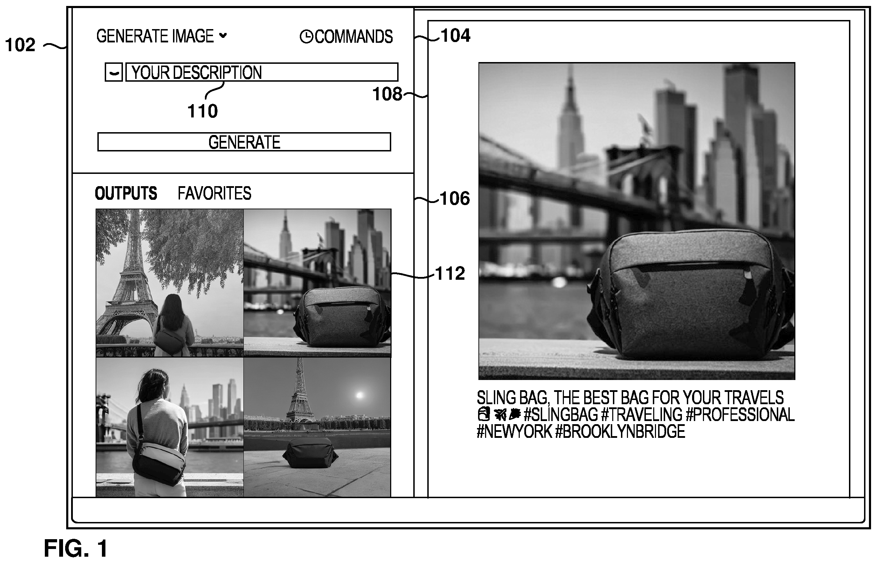

**Figure 1** is UI 102 for a canvas tool, also referred to herein simply as canvas, to generate multimodal content, according to some example embodiments. The UI 102 includes a prompt panel 104, the canvas 108, and a variations panel 106.

The prompt panel 104 includes a prompt field 110 for entering descriptive text for the desired results. The prompt field 110 is more than a simple input field because the prompt field 110 includes interactive tools for entering input easily.

After an input is entered in the prompt field 110, the content-generation tool generates results in the variations panel 106 with one or more options that can be selected by the user. The results are referred to herein as variations 112 or outputs. In the illustrated example, the input is for generating an image with certain characteristics, and the variations panel 106 shows several variations 112. If the user selects one of the variations 112, the selection is then added to the canvas 108. Additional new inputs may be entered in the prompt field 110, and new variations added to the canvas 108.

The content-generation tool is a platform that can generate multiple types of generative content that are customized for the user and the user's particular environment (e.g., assets, products, services, voice, style, and company of the user). Further, a template-creation tool allows the user to create custom templates to extend and customize the content-generation tool using no-code options that are easy to use. The prompt field 110 allows the user to express creative ideas naturally and seamlessly integrate with brand assets.

It is noted that embodiments are presented with reference to marketing-purpose outputs, but the same principles may be used in other environments, such as the generation of documents, contracts, employee newsletters, manuals, instructions, etc. The presented embodiments should therefore not be interpreted to be exclusive or limiting, but rather illustrative.

GAI can create new content by utilizing existing text, audio files, or images. It enables computers to detect the underlying pattern related to the input to produce similar content. GAI may create this content using several techniques, such as Generative Adversarial Networks (GANs), transformers, and variational auto-encoders.

One of the challenges of GAI is that GAI algorithms need a large amount of training data to perform tasks successfully. Another challenge of GAI is unexpected outcomes, so the content-generation tool has to make sure that the generated results are high-quality and safe to present.

In some examples, the images generated include the images of products, and the GAI-generated images are modified to overlay the images of products from a product database in order to preserve fidelity and avoid presenting distorted or inaccurate product images.

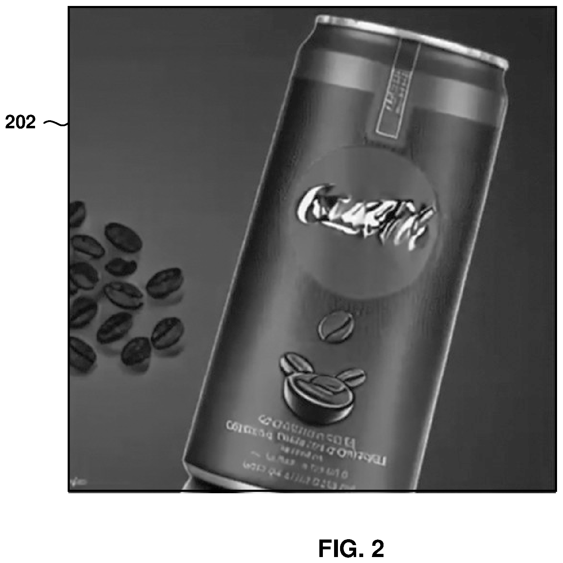

**Figure 2** shows an image 202 created by a Generative Artificial Intelligence (GAI) tool, according to some example embodiments. Currently, one of the problems of GAI is the generation of poor-quality images or images that present some distortion with reference to the desired asset. Typically, GAI tools do not "know" about particular products because of copyright issues; these GAI tools can not include product-specific information. For example, the GAI tool may generate "an image of a soda can," but the GAI tool may not know what a Coca-Cola can is, so a request for a Coca-Cola can may produce strange results. Further, even if the GAI tools know what a Coca-Cola can be, the output may include distortion on the product image, such as mangled text.

In the illustrated example, the GAI tool has generated the image 202 for a coffee Coca-Cola can. The image 202 generated of the can is close to the real one, but it is not perfect because it has a distorted Coca-Cola logo and imperfect text on the can.

One of the benefits of having assets in the content-generation tool is the ability to personalize the GAI-generated content to avoid having incorrect asset images. When generating images for production, the content-generation tool ensures that the typography and textual content of the product are preserved during generation. Further, the product aspect ratio, color, and style are preserved as part of the generation.

One of the benefits of the content-generation tool is the ability to personalize and affinitize products or services. Personalization means the ability to create custom models using custom images of the user's products or services. Personalization allows for the preservation of the product or service images, including text, images, and videos, to protect the user's brand.

Affinitize is the ability to create models that are "affine" with the user's assets (e.g., products, voice, sounds, colors, brand kits, etc.) by creating custom models that are trained using specific images for the products. Hence, the AI engine is aware of the products in the catalog and generates content using these products.

Replacing the asset in the image because it may not be immediately obvious, as the replacing asset may be partial or not look like the asset being replaced. Further, the replacement of the asset may also require to "re-paint" parts of the image, beyond simply replacing the assets, as the assets may not have the exact same shape.

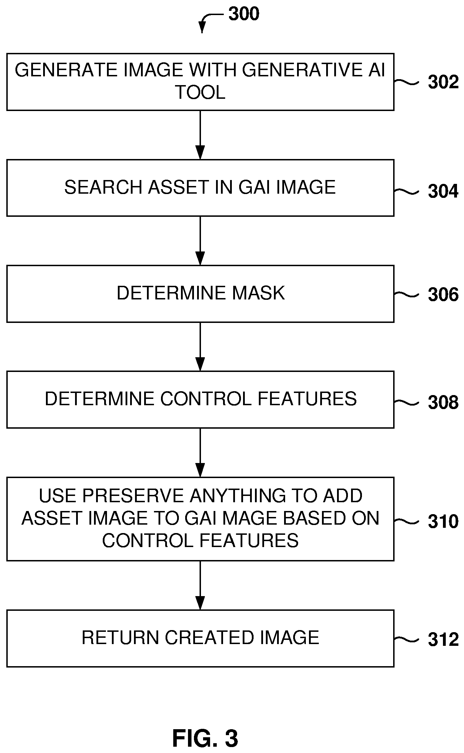

**Figure 3** is a flowchart of a method 300 for generating an image using a generative artificial intelligence (AI) tool while preserving specific assets and integrating them into the generated image based on control features. While the various operations in this flowchart are presented and described sequentially, one of ordinary skill in the art will appreciate that some or all of the operations may be executed in a different order, be combined or omitted, or be executed in parallel.

At operation 302, an image is generated by a GAI tool. The GAI tool may utilize a diffusion model, such as Stable Diffusion or Flux, to create an image based on a textual prompt. The generated image may include a background and various objects synthesized by the AI model. In some examples, the GAI tool incorporates foundational models integrated with ControlNet to allow for additional control features during the image generation process.

From operation 302, the method flows to operation 304, where the system searches for an asset within the generated image. The asset may be a specific product or object, such as a Coke can or an LG television, that the user intends to preserve and integrate into the generated image. The search process may involve identifying the asset based on its visual characteristics, such as color, shape, or texture, or based on metadata associated with the asset.

From operation 304, the method flows to operation 306, where a mask is determined for the identified asset. The mask is a binary representation that delineates the boundaries of the asset within the image. In some examples, the mask is represented as a black-and-white image, where the asset is represented by white pixels (e.g., value of 1) and the background is represented by black pixels (e.g., value of 0). The mask may be generated using segmentation algorithms or pre-trained models, such as BiRefNet, to ensure accurate delineation of the asset.

From operation 306, the method flows to operation 308, where control features are determined for the asset. Control features may include multiple input channels, such as the RGB image of the asset, the binary mask, and additional photometric properties. In some examples, photometric properties include lighting maps, which specify the direction and intensity of the light source, and material properties, such as texture or reflectivity. The control features are used to guide the integration of the asset into the generated image, ensuring that the asset is harmonized with the background in terms of lighting, shadows, and blending.

From operation 308, the method flows to operation 310, where the PA framework is used to add the asset image to the generated image based on the determined control features. The PA framework extends ControlNet to an N-channel design, allowing for the integration of multiple input conditions. In some examples, a high-frequency overlay module is used to preserve fine details of the asset, such as text and edges, by overlaying high-frequency components from the source asset onto the generated image. This ensures that the asset is accurately preserved and seamlessly integrated into the background.

High-frequency components refer to the fine details and intricate features in an image that are characterized by rapid changes in intensity or color over small spatial areas. These components typically include sharp edges, fine textures, and small-scale patterns, such as text, logos, or intricate designs on objects. In the context of image synthesis, high-frequency components are essential for preserving the clarity and fidelity of these details, which are often lost or distorted during the generative process. This process ensures that fine details, such as text and edges, are preserved in the final output. The high-frequency overlay technique operates as a post-processing step, where the high-frequency details from the original input image are reintegrated into the synthesized image. This approach addresses common issues in diffusion-based generative models, such as text distortion and edge blurriness, by maintaining the integrity of these critical details without introducing artifacts or compromising the harmonization of the object with the background.

From operation 310, the method flows to operation 312, where the created image with the integrated product image is returned. The final image includes the preserved asset integrated into the generated background with consistent lighting, shadows, and blending. The output image may be displayed to the user or stored for further use.

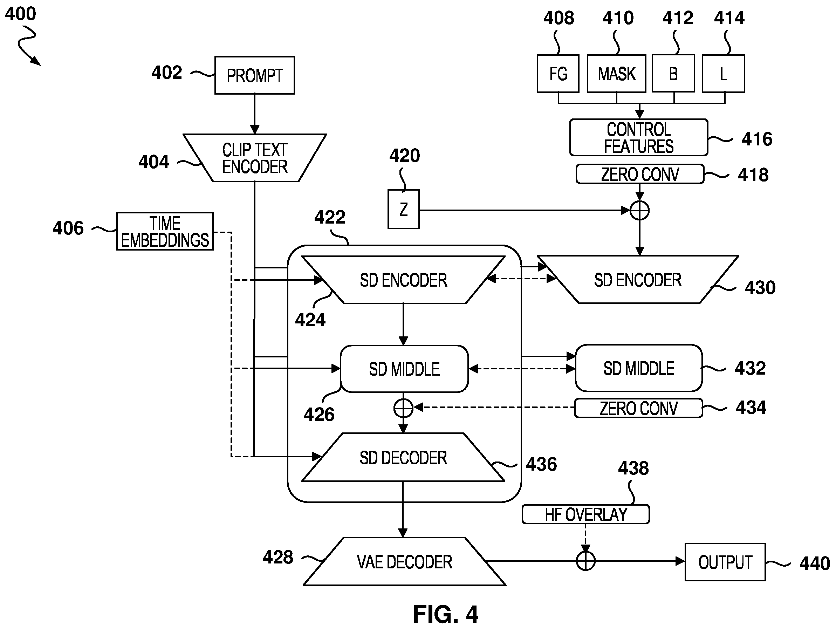

**Figure 4** shows a PA system 400 for controlled image synthesis that integrates multiple components to generate high-quality images with preserved objects and enhanced user control over scene composition.

A new framework for Controlled Image Synthesis (CIS), called Preserve Anything (PA), is presented. CIS is a process that enables the generation of images with precise control over object preservation, scene composition, and alignment with user-defined prompts or conditions. PA significantly enhances the ability to preserve target objects while improving the quality and controllability of the generated images. PA introduces an N-channel extension to ControlNet, enabling robust object preservation and the specification of structural layouts for the background and consistent lighting. To further enhance visual realism, the traditional Poisson blending is replaced with a lightweight yet effective post-processing method that overlays high-frequency details, such as text and patterns, onto target objects without requiring additional pre-trained models or computationally expensive modules.

Preserve Anything synthesizes high-quality images with explicit object preservation and enhanced user control over scene backgrounds, achieving visually consistent results. AnyScene leverages ControlNet by utilizing a target object on a white canvas along with its mask to control object layout in the generated scene.

To overcome the limitations of existing datasets, a large-scale benchmark dataset, named PA-240K, is introduced, comprising both natural and synthetically rendered images. This dataset is meticulously curated to include diverse prompts, spatial relationships, and geometric cues, such as lighting directions in spherical coordinates and camera parameters, alongside aesthetic scoring. While the real-image subset aids in object preservation, the 3D-rendered subset enables precise control over lighting, thereby enhancing the generalizability of our approach. Furthermore, *PA-240K* supports a wide range of high-level computer vision tasks, such as shadow estimation, depth map generation, and surface normal prediction. Through extensive evaluations on traditional benchmarks and user studies conducted on real-world images, PA showed improvements across a variety of factors, including natural aesthetics, object preservation, and applicability in marketing scenarios. The experimental results showed significant improvements over existing methods, showing that PA is a robust and versatile framework for CIS.

PA leverages a combination of textual prompts 402, structural inputs, and advanced processing modules to achieve seamless integration of objects into generated backgrounds.

The prompt 402 serves as the textual input that describes the desired image. This prompt is processed by a CLIP (Contrastive Language-Image Pretraining) text encoder 404, which converts the textual description into feature embeddings. CLIP is a model that aligns textual and visual features in a shared embedding space by converting text inputs into feature embeddings using a text encoder.

These embeddings are used to guide the image generation process. Simultaneously, time embeddings 406 are generated to provide temporal context for the diffusion process.

The time embeddings 406 are numerical representations used to encode the timestep information in diffusion models, providing temporal context during the image generation process. The time embeddings 406 are generated to represent the progression of the diffusion process, where noise is incrementally added and removed from the latent representation of the image. The time embeddings 406 are integrated into the SD 422 to guide the denoising neural network in predicting the noise at each timestep, ensuring that the image generation process follows the intended trajectory. By incorporating time embeddings, the system maintains consistency and alignment across the iterative refinement steps, enabling the generation of high-quality images.

The CLIP Text Encoder 404 converts textual input, such as the user-provided prompt 402, into a numerical representation or feature embedding. This embedding captures the semantic meaning of the text and is used to guide the image generation process in systems that integrate text-to-image synthesis. CLIP, which stands for Contrastive Language-Image Pretraining, is a model designed to learn visual concepts from natural language descriptions. The text encoder in CLIP processes the input text and generates a vector representation in a shared embedding space, where both text and image features can be compared and aligned. This alignment allows the system to ensure that the generated image corresponds closely to the semantic content of the textual prompt. In PA, the CLIP Text Encoder processes the textual prompt and generates feature embeddings that are fed into the diffusion model. These embeddings serve as a guide for the image synthesis process, ensuring that the generated image adheres to the semantic context and details specified in the prompt.

PA incorporates multiple input channels for structural and photometric guidance. These channels include a foreground image 408 (FG), a mask 410, a background layout 412(B), and a lighting map 414 (L). These inputs are collectively referred to as control features 416.

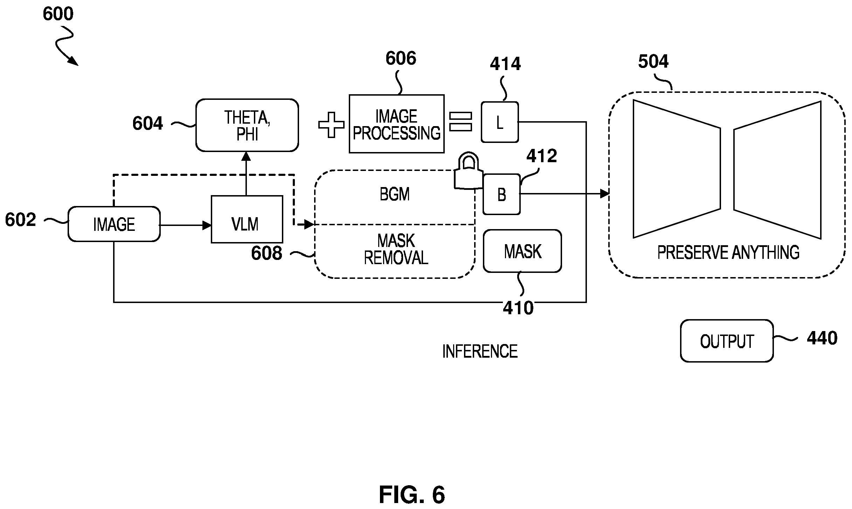

PA uses an N-channel architecture with N set to 6 in some example implementations. The initial three channels are allocated to the RGB image of the target object, which is maintained against a white background, designated as FG 408. The fourth channel, identified as mask 410, encodes the binary mask of the object. The fifth channel is the background layout, denoted by B 412, which may either be specified by the user or predicted through a Background Guidance Module (BGM). The BGM sub-module processes a reference image to produce a holistically-nested edge (HED) map, which functions as the B 412. Another channel is allocated for the lighting cue, L 414, which can either be provided by the user in spherical coordinates or predicted utilizing a vision-language model. The inference stage is illustrated in Figure 6, where mask 410 is predicted using a BiRefNet (mask removal) in the absence of user provision.

The introduction of multiple channels to control features and the provision of the RGB image of the product along with its mask as input, combined with an appropriate prompt during training, results in improved preservation of the product.

The foreground image 408, consisting of the RGB image, is provided along with the mask 410, e.g., represented in black and white using ones and zeroes to indicate the presence of the product on the canvas. When these control features 416 are supplied, the product image is effectively recovered and represented correctly.

The light channel L 414 represents a gradient indicating the direction of the light source. The lighting direction L 414 defines where the light source is. For instance, if lighting is required to originate from the top-right, a light map can be passed as a condition.

The control features 416 are processed through a Zero Conv module 418, which encodes them into a format suitable for integration with the diffusion model. By providing the textual prompt 402, the control features 416 or conditions can be added to influence the output.

The Zero Conv module 418 encodes the input features into a format suitable for integration with a diffusion model, and is a type of convolutional layer that initializes its weights to zero, ensuring that the initial output does not introduce any bias or distortion to the input data. This design allows the module to learn transformations during training without being influenced by pre-existing weights.

The use of the Zero Conv module 418 allows the system to integrate multiple input conditions, such as structural and photometric guidance, into the diffusion model. This integration ensures that the generated image adheres to the specified control features, such as object preservation, background layout, and lighting consistency.

Z 420 refers to a latent variable or latent representation within the diffusion model architecture or a variational autoencoder (VAE) setup. Z 420 is the initial latent input fed into the pipeline that includes the components of the Stable Diffusion (SD 422), including the SD Encoder 424, the SD Middle 426, and the SD Decoder 436.

Z 420 is an input to the control pathway that includes the SD Encoder 430, SD Middle 432, and Zero Conv 434, which guide the generation mechanism.

The encoded control features 416 and textual embeddings are fed into the main diffusion model SD 422, which includes the SD Encoder 424, the SD Middle 426, and the SD Decoder 436 that work together to refine the image representation in the latent space iteratively.

In parallel, the SD Encoder 430 receives inputs Z 420 and the output of the Zero Conv module 418 to refine the control features before they are integrated into the main diffusion process.

The SD Encoder 430 interacts with the SD Encoder 424, and the SD middle 432 interacts with the SD Middle 426 to control the image generation. Also, Zero Conv 434 is used as input for the SD Decoder 436.

The output from the SD Decoder 436 is passed to a VAE Decoder 428, which converts the latent representation into a high-resolution image. To address issues such as text distortion and edge blurriness, the system employs a high-frequency (HF) Overlay module 438, which overlays high-frequency details from the input foreground image 408 onto the generated image, ensuring the preservation of fine details.

During image generation, diffusion models often distort text on products or cause edges to appear slightly blurry. The overlay module 438 addresses these problems. High-frequency components from the source product are extracted and overlaid onto the generated image using the pre-existing mask.

The output image 440 is a synthesized image that integrates the specified foreground object, adheres to the textual prompt 402, and maintains consistency in lighting, shadows, and blending with the background. This system provides a robust framework for generating photorealistic images with precise control over object preservation and scene composition.

High-quality datasets are used to train models that can achieve robust object preservation and realistic scene synthesis. Existing methods, e.g., AnyScene, depend on randomly sampled datasets and captions produced by BLIP2, which frequently lack sufficient aesthetic diversity and contextual richness. To address these limitations, a dataset is curated comprising two subsets: a real-image subset for training object preservation and a 3D-rendered subset to enforce consistent lighting and shadow cues.

In some examples, images are acquired from MS-COCO, OpenImagesV7, and FFHQ, with a focus placed on aesthetic quality during the selection process. Initially, images lacking color are excluded by assessing the absolute differences between color channels within the lab color space. Subsequently, a filter is applied using LAION-Aesthetic scores, preserving only those images scoring above a threshold of 5.0, a level determined by the standards of MIT Adobe 5K.

For each selected image, a visual language model (VLM) (e.g., GPT4o) is employed to produce comprehensive annotations. The VLM is a system that interprets and processes visual content, such as images, in conjunction with textual information to extract semantic and contextual features. These annotations include: (i) five captions of varying lengths (20-50 words) detailing objects, background elements, and environmental specifics such as lighting, (ii) lighting directions represented in spherical coordinates (elevation θ and azimuth ϕ), (iii) camera angles and orientations, (iv) descriptions of objects with spatial relationships and interactions, and (v) aesthetic evaluations based on composition, memorability, and marketing potential.

In some examples, the training subset comprises 18,000 rendered images produced using Blender's Cycles renderer. The scenes are generated utilizing 14 assets and 48 environments sourced from Poly-Haven, with each pose rendered across four distinct lighting configurations. For each render, maps are saved to capture the fundamental 3D geometry, material, and illumination cues, including albedo, diffuse shading, reflections, shadows, surface normals, and depth. These maps enable the method to learn lighting and shadow consistency and offer a foundation for enhancing the realism of the generated images. The 3D-rendered subset is employed for pre-training to capture lighting and shadow cues, while the real image subset is employed for fine-tuning in the areas of object preservation and scene synthesis.

In some examples, PA comprises three modules: an object preservation module, a background guidance module, and a high-frequency overlay module.

The object preservation module, denoted O, is responsible for preserving the visual appearance and structural integrity of target objects. The default ControlNet guidance maps (e.g., Canny edges) are insufficient for preserving object appearance because they focus only on structural outlines. To overcome this, ControlNet is extended with the N-channel design, where each condition (e.g., object mask, lighting) is provided as a dedicated input channel.

The input conditions include the target object on a white canvas ( $∈ {ℝ}^{h \times w \times 3}$ ), its binary mask ( $M ∈ {ℝ}^{h \times w \times 1}$), optional background layout ( $B ∈ {ℝ}^{h \times w \times 1}$ ), and optional lighting map ( $∈ {ℝ}^{h \times w \times 1}$). These inputs are encoded into a conditioning vector *c^{f}* via a lightweight CNN encoder *ε* as follows: ${c}^{f} = ε \left(I, M, B, L\right)$ (1)

The conditioning vector *c^{f}* is fused into the latent space of the diffusion model to guide generation. The use of object mask *M* 410 ensures color and detail fidelity for the target object without requiring additional loss functions.

The background guidance module allows users to specify the layout of the background scene. In some examples, during training, the background layouts (*B*) are derived from the reference images (*R*) using a Holistic-Nested Edge Detection (HED), capturing the structural appearance of the background: $B = H \left(R\right) .$ (2)

The foreground regions in *B* are masked out using *M,* ensuring clear separation between objects and the background. If no layout is provided, *B* defaults to an empty channel filled with zeros. This ensures the framework remains robust in scenarios where explicit background control is not needed.

To enforce consistent lighting, an additional channel *L* is introduced to represent lighting direction. In some examples, the lighting direction is represented by azimuthal angles (*ϕ*) and converted into gradient maps simulating illumination intensity. These maps align shadows and highlights with real-world conditions.

The high-frequency overlay module 438 reintegrates high-frequency details, such as text and patterns, onto the target object in the synthesized scene. Given the generated scene *J* and the target object image *I,* the low-frequency details ℓ*_{lf}* from *J* are combined with high-frequency details ℓ*_{hf}* from *I:* $\hat{I} = {l}_{{l}_{f}} \left(J\right) + {l}_{{h}_{f}} \left(I\right)$ (3)

This heuristic approach avoids reliance on external blending tools and ensures seamless reintegration of fine details.

The training process involves two stages. First, the model is pre-trained on the 3D-rendered subset to capture lighting and shadow cues. Second, the model is fine-tuned on the curated Real-Image subset for object preservation and scene synthesis. To enhance robustness, input channels (*B, L*) are randomly pruned during training, enabling the model to generalize to scenarios where these cues are absent. Training also employs classifier-free guidance by randomly dropping textual prompts and conditions at a predefined rate (e.g., 0.05). In some examples, the framework is initialized with a pre-trained Canny-ControlNet checkpoint for efficiency.

In some examples, the large-scale dataset for CIS includes real-world and 3D-rendered synthetic images. The real-world images from MS-COCO, OpenImagesv7, and FFHQ datasets were used. However, instead of randomly selecting the images for training CIS models, a filtering strategy is used to leverage images with better aesthetic quality by using a LAION (Large-scale Artificial Intelligence Open Network) Aesthetic score. LAION is an open dataset designed for training and evaluating machine learning models, particularly in image-text alignment tasks, using large-scale, high-quality image-text pairs curated for aesthetic and semantic relevance.

In some examples, images with LAION Aesthetic scores above a threshold of 5.0 were used. The threshold is configurable based on the average LAION Aesthetic scores on MIT Adobe 5K images. In some examples, the grayscale images were discarded.

In some examples, detailed annotations were generated for each selected image by using GPT-4o. This process included the creation of five captions of varying lengths, typically ranging from 20 to 50 words, which described the salient objects and background elements within the images. Fixed-length captions can lead to overfitting during training, as the model may associate specific objects with repetitive environmental features. For example, describing "dogs on green grass" repeatedly may cause the model to associate green grass exclusively with dogs. Variations such as "dogs sitting on the grass" or "grass underneath the dogs" allow the model to focus on semantics and learn the relationships between objects and their environments. At least five captions were created with varying lengths and descriptions of objects, backgrounds, and environmental details.

Furthermore, the dominant light source was identified in terms of spherical coordinates, complementing the determination of camera orientation. Additionally, the images were evaluated to derive corresponding albedo, shading, depth, and surface normal maps. The analysis also encompassed the spatial relationships between different objects in the scene, such as recognizing that the fence is positioned behind the person. Action relationships were also noted, such as the observation that the person was holding the coffee cup. The annotations recorded various technical details, including the strength and direction of the light source, the presence of shadows, the color palette, as well as the depth of field and exposure. In terms of camera orientation, specifics such as roll, pitch, and yaw were included. These characteristics were complemented by an aesthetic scoring that measured overall composition, focus, clarity, memorability (which denotes the degree to which an image stays in memory), timelessness, and the emotions elicited by the image.

In one implementation, the real-image subset consisted of 240K images with the above-detailed annotations. These annotations were beneficial for solving diverse tasks. Quality prompts and lighting conditions were leveraged to enhance photorealism in CIS. Beyond image synthesis tasks, object descriptions with their spatial and action relationships could be used for efficient image understanding, as well as technical and aesthetic details for image quality assessment.

In addition to the real-image subset, a synthetic subset was constructed to control different natural aesthetics, such as lighting and shadow, in the generated images. In some examples, Blender's raytrace-based Cycles renderer was used to generate images of 3D assets. Different HDR environment textures from PolyHaven were collected for lighting the 3D assets while rendering. For each asset/environment pair, camera orientation was varied in terms of azimuthal angle from 0° to 360° and elevation angle from 45° to -15°. For each render, maps capturing the essential 3D geometry, material, and illumination cues were developed, which include albedo, diffuse shading, reflections, shadows, surface normals, and depth. These maps allow PA to learn lighting and shadow consistency and provide a basis for improving the realism of the generated images.

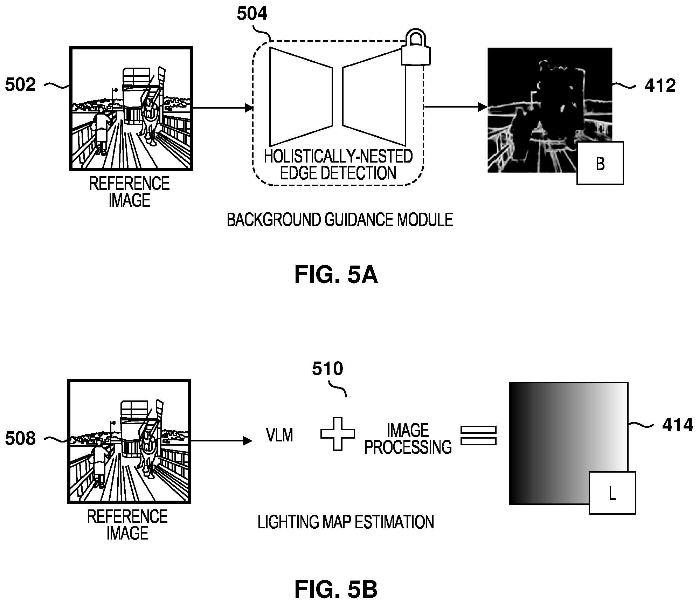

**Figure 5A** shows a background guidance module that processes a reference image 502 to generate a structural representation of the background layout B 412.

In some example use cases, the network is provided with additional cues, such as the structure of the background or the environment. For example, a prompt might specify, "There is a road on which the object has been placed, and there are trees on the right side." The layout would include these structural elements to guide the network toward generating images that align more closely with user expectations. Adding channels such as the background layout B 412 or lighting L 414 enables the network to respect these additional inputs.

One implementation incorporates the foreground (FG), mask, and background layout B 412. The background layout B 412 provides a structural representation of the desired background without specifying the objects themselves. For example, the left side may depict the image 502, while the layout is used during training to guide the network toward generating a similar structure. The layout serves as a hint for the appearance of the background without restricting the creative capabilities of the network.

In the illustrated example, PA 504 employs holistically-nested edge detection to extract the structural features of the image 502. This process captures the primary outlines and edges within the image, which are then used to create the background layout B 412. The background layout serves as a guide for controlling the structural composition of the generated image, ensuring that the synthesized background aligns with the desired scene structure.

**Figure 5B** shows an estimation process for the lighting map L 414 used in the context of controllable image synthesis with object preservation.

In the illustrated example, the light source L 414 is positioned to create a gradient transitioning from bright to dark. Shadows are generated behind the product in accordance with the direction of the light source. This level of control is achieved through the use of the lighting mask or channel. Without this specific input, the generated shadows may appear in inconsistent directions, as the model independently determines the lighting conditions. The inclusion of this channel enhances controllability.

The image 508 is processed using the VLM 510 and image processing to obtain the lighting map L 414. The VLM 510 is responsible for interpreting the visual content and extracting relevant features. The VLM 510 works in conjunction with the image processing module to analyze the reference image and determine the lighting conditions present in the scene.

The output of the VLM 510 and the image processing module is the lighting map L 414, which represents the direction and intensity of the light source in the reference image 508, encoded as a gradient. The lighting map 414 is used to guide the synthesis of new images, ensuring that the lighting conditions are consistent with those in the reference image 508. This helps in achieving realistic integration of objects into generated backgrounds, maintaining accurate shadows and highlights.

**Figure 6** shows a system 600 for generating high-quality images with object preservation and enhanced control over scene composition using PA, according to some examples. The inference process integrates multiple components to process an input image 602 and generate the output image 440.

The input image 602 serves as the primary visual data for the system. The image 602 is processed by the VLM 510, which extracts semantic and contextual information from the image. The VLM 510 also generates lighting direction parameters, represented as theta and phi 604, which define the azimuthal and polar angles of the light source. These parameters assist in maintaining consistent lighting in the generated image.

The mask 410, along with the B 412 and the L 414, are utilized during image processing by the PA 504 to generate the enhanced output image 440. The PA 504 ensures that the desired image elements are retained in the final output.

The extracted information, including the lighting parameters, is passed to an image processing module 606. This module combines the input image with additional structural and photometric guidance to prepare the data for further processing. The image processing module 606 generates the lighting map L 414. The lighting map L 414 encodes the direction and intensity of the light source, while the background layout B 412 provides a structural representation of the scene.

Further, a mask 410 is generated or refined through a mask removal process 608 within the background guidance module (BGM). The mask 410 delineates the boundaries of the object to be preserved, ensuring that the object is accurately identified and separated from the background.

The PA 504 generates the output image 440 that preserves the object while harmonizing the object with the background. Further, the PA 504 ensures that the object is seamlessly integrated into the scene, maintaining consistent lighting, shadows, and blending. The output image 440 is a high-quality, photorealistic image where the object is preserved and naturally integrated into the generated background.

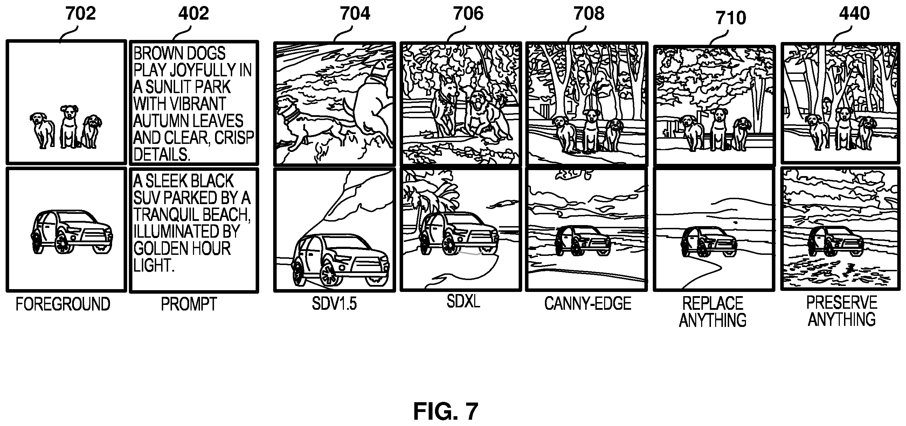

**Figure 7** shows a qualitative comparison of image synthesis results generated by multiple solutions. In some examples, the solutions include SDv1.5 704, SDXL 706, Canny-Edge 708, Replace Anything 710, and PA image 440.

Two examples are illustrated, one for a scene with three dogs and another for a scene with an SUV. The prompt used for the first scene was "Brown dogs play joyfully in a sunlit park with vibrant autumn leaves and clear, crisp details." The input object is a foreground image 702 that includes three dogs, with an additional channel where the dogs were represented without color, appearing as white, while the rest of the image remained unchanged.

The result comparison is based on two distinct foreground images 702 and their corresponding prompts 402, illustrating the effectiveness of each method in generating photorealistic and semantically aligned images.

The first row depicts the results for the three dogs image generation. The foreground image 702 consists of three dogs. The images generated by SDv1.5 704 and SDXL 706 exhibit noticeable deviations in the preservation of the dogs, with some distortion in their appearance and a lack of seamless integration into the background. The Canny-Edge image 708 improves structural alignment but fails to achieve realistic blending and harmonization, resulting in an artificial appearance.

The Replace Anything image 710 demonstrates better integration of the dogs into the scene but introduces minor artifacts and inconsistencies in lighting and shadows. The output image 440, on the other hand, achieves superior results, maintaining the fidelity of the dogs' appearance while ensuring realistic blending, accurate shadows, and seamless integration into the vibrant autumn park background.

The second row evaluates the methods using a prompt 402 that describes "A sleek black SUV parked by a tranquil beach, illuminated by golden hour light." The foreground image 702 is a black SUV. The SDv1.5 image 704 and SDXL image 706 have reasonable adherence to the prompt but fail to capture the nuanced lighting and shadow details required for photorealism. The Canny-Edge image 708 provides better structural alignment but lacks the ability to produce realistic lighting effects, resulting in a less convincing output. The Replace Anything image 710 improves the overall composition but introduces subtle inconsistencies in the SUV's integration with the beach environment. The output image 440 delivers the most realistic and visually coherent result, accurately preserving the SUV's details while harmonizing the SUV with the golden hour lighting and the tranquil beach setting.

Experiments were conducted to evaluate the performance of PA against existing methods utilizing a comprehensive suite of image quality metrics. Visual quality was assessed using Frechet Inception Distance (FID). CLIP-Scores were used to measure text-visual consistency. Additionally, the aesthetic quality of the generated images was evaluated using Neural Image Assessment (NIMA).

The training experiments were conducted on a single NVIDIA A100 GPU with a batch size of 16, using resolutions of 512×512 and 1024×1024. The models were trained using the AdamW optimizer with a learning rate of 1×10-4. Training for Stable Diffusion v1.5 (SD v1.5) and SDXL was completed in approximately 40 hours, corresponding to 100K and 10K training steps, respectively. The training set comprised 240K images, where 3K images were evaluated.

The experiments showed a significant improvement of about 6% in terms of FID score versus AnyScene. A detailed user study observed a remarkable improvement of ~ 25%, ~ 19%, ~ 13%, and ~ 14% in terms of prompt alignment, photorealism, the presence of AI artifacts, and natural aesthetics. Thus, PA was proven to be the best choice to seamlessly composite objects into a generated image and allow users to adjust the background layout while ensuring consistent lighting.

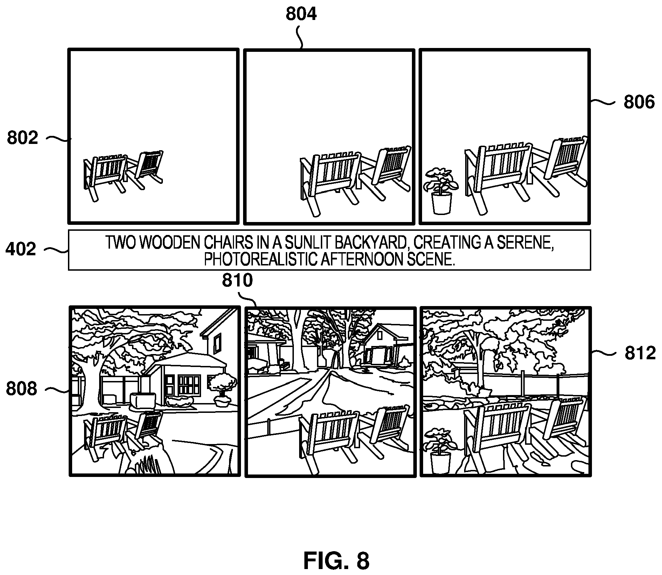

**Figure 8** shows an example of processing multiple objects and generating photorealistic scenes with variations in size, placement, and context while maintaining semantic alignment with the provided textual prompt 402 and text prompt content 810.

The input images included an image with wooden chairs 802, an image with wooden chairs 804 with a closer view of the two chairs, and an image with two wooden chairs and a plant 806. The textual prompt 402 specifies the desired scene: "Two wooden chairs in a sunlit backyard, creating a serene, photorealistic afternoon scene."

The second row of images displays the generated scenes: image 808 corresponding to wooden chairs 802, image 810 corresponding to wooden chairs 804, and image 812 corresponding to wooden chairs and plant 806. The results demonstrate the ability of PA to handle multiple objects and incorporate additional elements into the scene composition.

The third image for wooden chairs and plant 806 shows the capability of PA to process multiple objects, such as the wooden chairs and the plan. Further, PA supports size and placement agnosticism, meaning that the same objects can be rendered in different configurations within the scene while adhering to the prompt semantic requirements. This flexibility allows the system to generate multiple variations of the same scene, as evidenced by the distinct outputs in image 808 and image 812. The generated scenes demonstrate seamless integration of the objects into the background, with consistent lighting, shadows, and blending, ensuring a natural and realistic appearance.

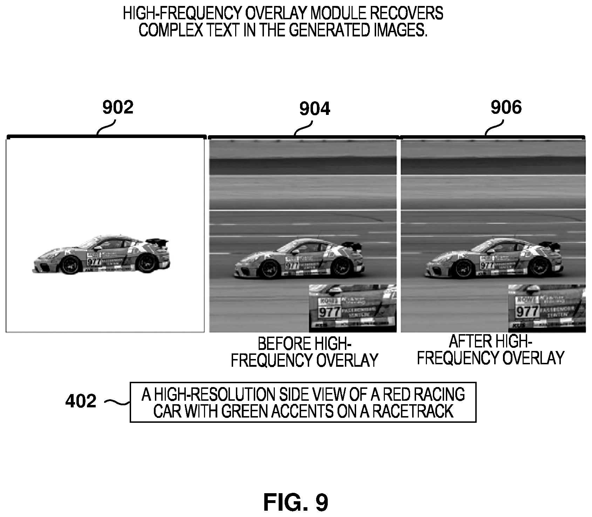

**Figure 9** shows the application of the high-frequency overlay module to recover complex text and fine details in generated images. **Figure 9** illustrates the process and results of applying PA to a high-resolution side view of image 902 with a red racing car with green accents on a racetrack, with the textual prompt 402, and the effects before and after the high-frequency overlay, labeled as image 904 and image 906, respectively.

The image 902 represents the initial input image of the racing car, which serves as the foreground object to be preserved during the image generation process. The image 902 provides the foundational details, including the car's structure, colors, and text elements. The image 904 depicts the generated image before the application of the high-frequency overlay module. In this state, while the overall structure of the racing car is preserved, the text and fine details on the car, such as logos, numbers, and other intricate patterns, appear distorted or blurred. This distortion is a common limitation of diffusion-based generative models, which often struggle to retain high-frequency details during the synthesis process.

The high-frequency overlay module operates by extracting high-frequency components from the input image 902 and overlaying them onto the generated image 906. This process ensures that fine details, such as text and edges, are preserved without introducing artifacts or compromising the harmonization of the object with the background.

The image 906 illustrates the generated image after the application of the high-frequency overlay module. PA reintegrates high-frequency details from the original image 902 into the generated image 906. As a result, the text, logos, and intricate patterns on the racing car are restored with clarity and precision. For example, the racing number "911" and associated text on the car's body are now sharp and legible, demonstrating the module's effectiveness in recovering complex text and enhancing the overall realism of the generated image.

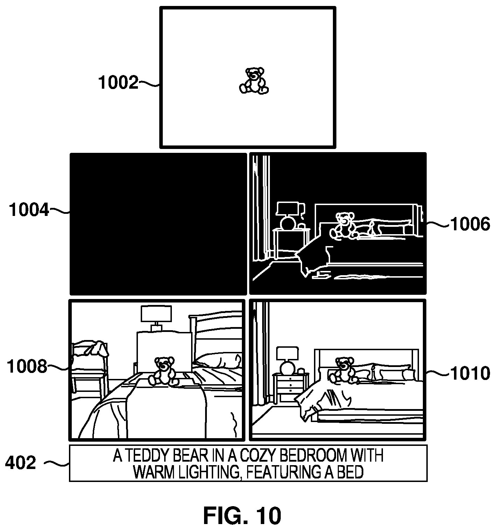

**Figure 10** shows an example method for controllable image synthesis, demonstrating the integration of a foreground object into a generated scene with and without background control.

**Figure 10** illustrates the use of multiple input channels, including a foreground object 1002, a binary mask 1004, and an edge map 1006, to guide the generation of a photorealistic image 1008 and image 1010, based on the textual prompt 402. The textual prompt 402, "A teddy bear in a cozy bedroom with warm lighting, featuring a bed," describes the desired scene and guides the image generation process.

The foreground object 1002 is a teddy bear, which serves as the primary subject to be preserved during the image generation process. The left column shows the result image 1008 without the use of a mask (e.g., no binary mask 1004), and the right column shows the result image 1010 with the use of edge map 1006 that delineates the boundaries of the desired scene, including the placement of the foreground object 1002 and the elements of the background (e.g., bedroom setting).

The edge map 1006 ensures that the teddy bear is clearly separated from the background, allowing the system to focus on preserving the details of the teddy bear while generating the surrounding scene based on the textual prompt 402.

The edge map 1006 captures the primary outlines and edges of the desired scene, such as the bed and surrounding furniture, enabling the system to generate a coherent and semantically aligned background. The inclusion of the edge map results in a more coherent and visually consistent background, with the teddy bear seamlessly integrated into the cozy bedroom setting. This feature serves as an additional control mechanism, allowing users to specify the structural composition of the generated scene.

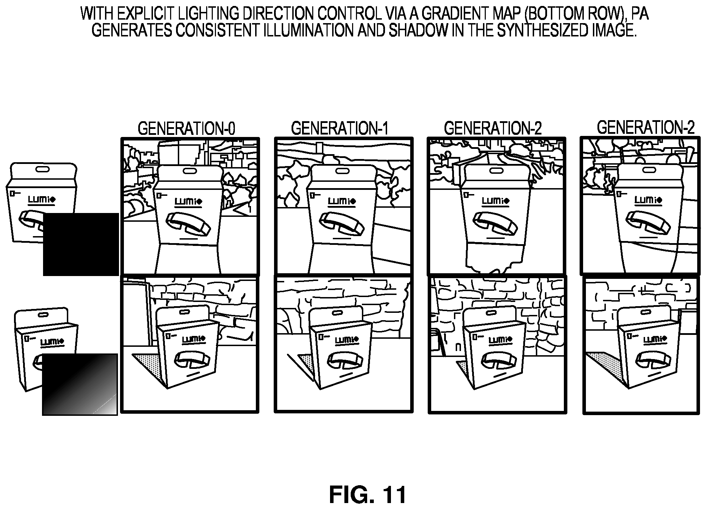

**Figure 11** shows the impact of explicit lighting direction control using a gradient map on the generation of synthesized images, demonstrating the ability of the proposed method to produce consistent illumination and shadow effects. **Figure 11** illustrates a comparison between different lighting conditions applied to a target object, specifically a product box, across multiple generations.

The top row represents the synthesized images generated without explicit lighting direction control. These images exhibit variations in lighting and shadow placement, which are determined by the model's internal assumptions rather than user-defined inputs. As a result, the shadows and illumination in these images may lack consistency or alignment with the desired lighting conditions.

The examples include multiple generations, labeled as Generation 0 to Generation 3, to showcase the reproducibility of the method under varying conditions. The bottom row demonstrates the results of applying explicit lighting direction control via a gradient map.

Each generation maintains the fidelity of the product's appearance while adhering to the specified lighting parameters. The gradient map encodes the direction and intensity of the light source, allowing the system to generate images with precise and consistent lighting effects.

In these images, the shadows and highlights are accurately aligned with the specified lighting direction, ensuring a realistic and coherent appearance. For example, the shadows cast by the product box are positioned consistently across the images, and the illumination on the box surface reflects the intended light source direction. This showcases the robustness of the proposed method in preserving object details and achieving photorealistic integration of lighting and shadow effects.

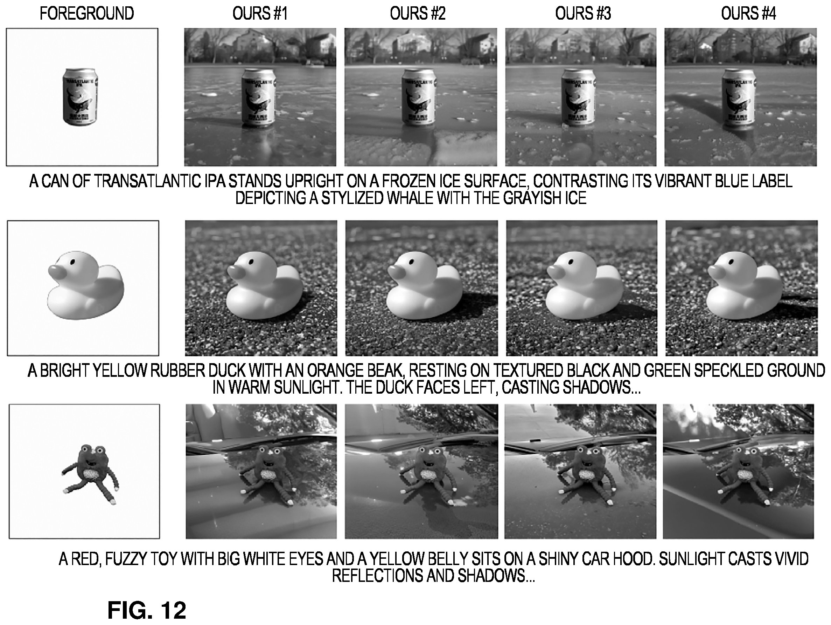

**Figure 12** illustrates the results of the process to maintain natural aesthetics, such as lighting, shadows, and reflections, across multiple generations of synthesized images. The images generated by PA demonstrate enhanced photorealism, preserving natural aesthetics such as lighting and shadows, while the target objects are well-integrated with the background scene.

The examples demonstrate how PA preserves consistency with respect to the input foreground on the first column and the corresponding textual prompts, even when generating variations of the same scene.

The first row features a can of beer as the foreground 1. The generated outputs, labeled as Ours #1 to Ours #4, depict the can standing upright on a frozen ice surface. The method successfully retains the vibrant blue label of the can, which contrasts with the grayish ice background. Across all generations, the lighting and reflections on the ice surface are consistent with the prompt, ensuring a realistic integration of the can into the scene.

The second row showcases a bright yellow rubber duck with an orange beak as the foreground 1. The outputs depict the duck resting on a textured black and green speckled ground under warm sunlight. The duck consistently faces left, and the method accurately captures the casting of shadows and the interplay of light on the duck's surface. The variations maintain the natural aesthetics of the scene while adhering to the prompt.

The third row presents a red, fuzzy toy with prominent white eyes and a yellow belly as the foreground 1. The outputs show the toy sitting on a shiny car hood under sunlight. The method effectively captures vivid reflections and shadows on the car hood, ensuring the toy appears naturally integrated into the scene. The lighting and shadow details are consistent across all generations, demonstrating the method's ability to preserve photorealism and prompt alignment.

The examples highlight the robustness of the proposed solution in generating photorealistic images with consistent natural aesthetics, even when producing multiple variations of the same scene.

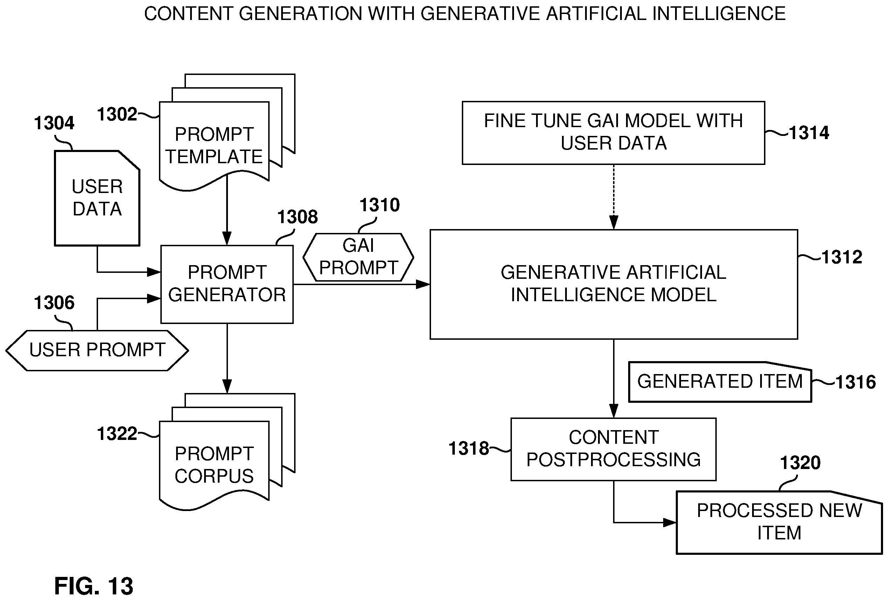

**Figure 13** illustrates the use of a Generative Artificial Intelligence (GAI) model 1312 to generate new content, according to some examples. GAI is a type of AI that can generate new content, such as images, text, video, or audio. The GAI model 1312 is trained on large datasets of data and uses this data to learn the patterns and relationships between different elements of the data. There are several types of GAI models, such as Generative Adversarial Networks (GANs), Variational Autoencoders (VAEs), and Autoregressive models.

The GAI models generate items of different types, such as GAI models for creating text (e.g., GPT-4, Pathways Language Model 2 (PaLM 2), LaMDA), images (e.g., DALL-E 2, Stable Diffusion), videos (Runway Gen-2, Stable Diffusion Video), audio (e.g., Google MusicLM, Stable Audio), etc.

Often, the companies that create the GAI models make the GAI models available to users who can apply them to generate the desired content based on a GAI prompt 1310 provided to the GAI model 1312. Users can utilize the GAI model 1312 as provided by the vendor or can optionally fine-tune 1314 the GAI model 1312 with their user data to adjust the parameters of the GAI model 1312 in order to improve performance on a specific task or domain.

In some examples, fine-tuning the GAI model 1312 includes the following operations:
1. Collect user data: Gather user data that is relevant to the target task or domain. This data could include text, images, audio, or other types of data;
2. Label the data: if the task requires supervised learning, the user data is labeled with the correct outputs;
3. Select a fine-tuning method. Some of the methods for fine-tuning GAI models include Full fine-tuning, Few-shot fine-tuning, and Prompt-based fine-tuning;
4. Train the GAI model 1312: Perform incremental training of the tune 1314 using the selected fine-tuning method and
5. Optionally, evaluate the performance of the fine-tuned model on a held-out dataset.

The GAI model 1312 can be used to generate new content based on the GAI prompt 1310 used as input, and the GAI model 1312 creates a newly generated item 1316 as output.

The GAI prompt 1310 is a piece of text or code that is used to instruct the GAI model 1312 to generate a desired output (e.g., generated item 1316). The GAI prompt 1310 provides context, instructions, and expectations for the output. The newly generated item 1316 may be multi-modal, such as a piece of text, an image, a video, an audio, a piece of programming code, etc., or a combination thereof.

A prompt generator 1308 is a computer program that generates the GAI prompt 1310. There are several ways to generate the GAI prompt 1310. In one example, the prompt generator 1308 may use a user prompt 1306 entered by the user in plain language as the GAI prompt 1310. In other examples, the prompt generator 1308 creates the GAI prompt 1310 without having a user prompt 1306, such as by using a static pre-generated prompt based on the desired output.

In other examples, the prompt generator 1308 uses a prompt template 1302 to generate the GAI prompt 1310. The prompt template 1302 defines the structure of the GAI prompt 1310 and may include fields that may be filled in based on available information to generate the GAI prompt, such as user data 1304 or user prompt 1306.

The user can provide additional information with user instructions for the CGS to generate images. This information may be derived from information about products, audiences, etc., configured by the user on DGS.

Further, the prompt generator 1308 may access prompts from a prompt corpus 1322 that includes a curated set of prompts that perform well for specific scenarios. The prompt corpus 1322 is a database of the best prompts that we have carefully selected and tested. By combining the prompt corpus with the template and user inputs, a quality prompt is selected for use.

After the generated item 1316 is generated, an optional operation 1318 of content postprocessing may be performed to modify or block the newly generated item 1316, resulting in a processed new item 1320. The generated item 1316 may be post-processed for various reasons, including improving accuracy and consistency (e.g., checking for factual errors, grammatical mistakes, or inconsistencies in style or format); enhancing quality and relevance (e.g., removing irrelevant or redundant content, improving coherence and flow, ensure that the output aligns with the intended purpose); enhancing output (e.g., polish wording, improve images, ensure that the style matches the desired effect); personalizing the newly generated item 1316; and ensuring ethical and responsible use.

The generated item 1316 is new content, and it does not refer to content that is the result of editing or changing existing material (e.g., editing an image to include text within is not considered GAI-generated new content). One difference between the generated item 1316 and material created with editing tools is that the newly generated item 1316 is entirely new content, while the editing tool modifies existing content or creates the content one instruction at a time. Another difference is that the GAI model 1312 can produce highly creative and imaginative content, while editing tools focus on enhancing the existing content based on user commands. Another difference is that the GAI model 1312 can generate content rapidly, while the editing tools require more time and effort for thorough editing and refinement.

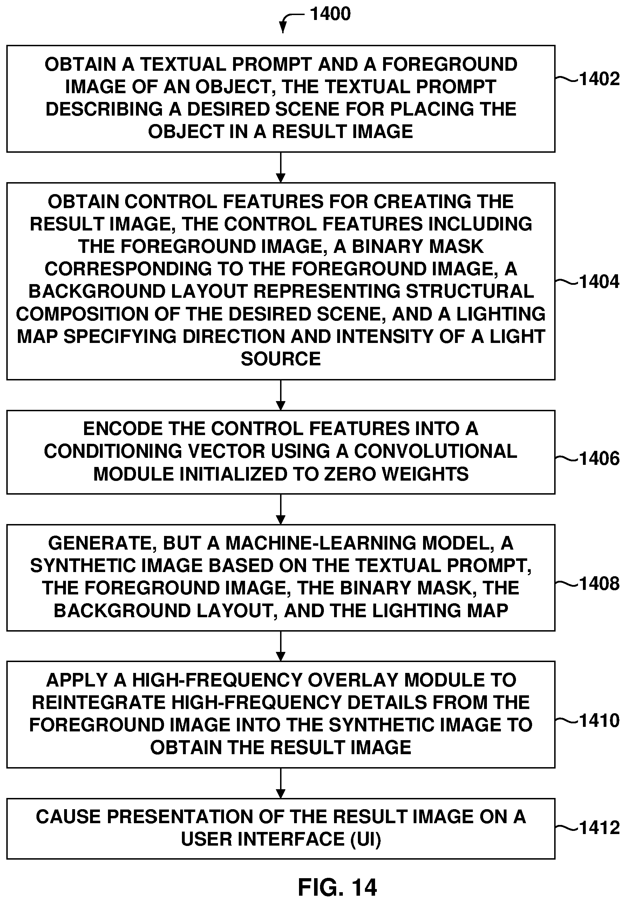

**Figure 14** is a flowchart of a method 1400 for generating images with controllable image synthesis and object preservation, according to some examples. While the various operations in this flowchart are presented and described sequentially, one of ordinary skill will appreciate that some or all of the operations may be executed in a different order, be combined or omitted, or be executed in parallel.

At operation 1402, PA obtains a textual prompt and a foreground image of an object. The textual prompt describes a desired scene for placing the object in a result image. The foreground image serves as the primary visual input, representing the object to be preserved and integrated into the generated scene. In some examples, the textual prompt may include detailed descriptions of the scene, such as environmental elements, lighting conditions, or spatial relationships, to guide the synthesis process.

From operation 1402, the method flows to operation 1404, where control features for creating the result image are obtained. In some examples, the control features include the foreground image, a binary mask corresponding to the foreground image, a background layout representing the structural composition of the desired scene, and a lighting map specifying the direction and intensity of a light source. The binary mask is a black-and-white representation that delineates the boundaries of the foreground object, with white pixels indicating the object and black pixels representing the background. The background layout provides structural guidance for the scene, which may be derived from a reference image using techniques such as Holistically-Nested Edge Detection. The lighting map encodes photometric properties, such as the azimuthal and polar angles of the light source, to ensure consistent illumination and shadow effects in the generated image.

From operation 1404, the method flows to operation 1406, where the control features are encoded into a conditioning vector using a convolutional module initialized to zero weights. The convolutional module processes the control features, including the foreground image, binary mask, background layout, and lighting map, to generate a conditioning vector that is compatible with the machine-learning model. In some examples, the convolutional module may employ a lightweight convolutional neural network (CNN) to encode the input features into a latent representation. Initializing the module with zero weights ensures that the initial output does not introduce bias or distortion, allowing the system to learn transformations during training.

From operation 1406, the method flows to operation 1408, where a machine-learning model generates a synthetic image based on the textual prompt, the foreground image, the binary mask, the background layout, and the lighting map. In some examples, the machine-learning model may be a diffusion model, such as Stable Diffusion or Flux, configured to iteratively refine the synthetic image by removing noise from a latent representation. The integration of the conditioning vector into the model ensures that the generated image adheres to the specified control features, preserving the foreground object while harmonizing the foreground object with the background.

From operation 1408, the method flows to operation 1410, where a high-frequency overlay module is applied to reintegrate high-frequency details from the foreground image into the synthetic image to obtain the result image. In some examples, high-frequency components, such as text, edges, and intricate patterns, are extracted from the foreground image and overlaid onto the synthetic image using the binary mask. This process addresses common issues in diffusion-based generative models, such as text distortion and edge blurriness, by preserving fine details without introducing artifacts or compromising the harmonization of the object with the background.

From operation 1410, the method flows to operation 1412, where the result image is presented on a user interface (UI). The result image includes the preserved foreground object seamlessly integrated into the synthesized background, with consistent lighting, shadows, and blending. The UI may provide options for further user interaction, such as modifying the textual prompt, adjusting control features, or generating additional variations of the result image. In some examples, the result image may be stored or transmitted for use in applications such as advertising, content creation, or visual design.

In view of the disclosure above, various examples are set forth below. It should be noted that one or more features of an example, taken in isolation or combination, should be considered within the disclosure of this application.

Example 1. A computer-implemented method comprising: obtaining a textual prompt and a foreground image of an object, the textual prompt describing a desired scene for placing the object in a result image; obtaining control features for creating the result image, the control features including the foreground image, a binary mask corresponding to the foreground image, a background layout representing structural composition of the desired scene, and a lighting map specifying direction and intensity of a light source; encoding the control features into a conditioning vector using a convolutional module initialized to zero weights; generating, but a machine-learning model, a synthetic image based on the textual prompt, the foreground image, the binary mask, the background layout, and the lighting map; applying a high-frequency overlay module to reintegrate high-frequency details from the foreground image into the synthetic image to obtain the result image; and causing presentation of the result image on a user interface (UI).

Example 2. The method of Example 1, further comprising: deriving the background layout from a reference image using edge detection techniques to capture structural features of the object.

Example 3. The method of any one or more of Examples 1-2, further comprising: generating the lighting map by analyzing a reference image to determine a direction and intensity of a light source, the lighting map being represented as a gradient.

Example 4. The method of any one or more of Examples 1-3, wherein the machine-learning model is a diffusion model configured to iteratively refine the synthetic image by removing noise from a latent representation.

Example 5. The method of any one or more of Examples 1-4, wherein the convolutional module is configured to encode the control features into a latent space compatible with the machine-learning model.

Example 6. The method of any one or more of Examples 1-5, wherein the high-frequency overlay module extracts high-frequency details from the foreground image, including text, edges, and intricate patterns, and the high-frequency overlay module overlays the high-frequency details onto the synthetic image.

Example 7. The method of any one or more of Examples 1-6, wherein the result image includes multiple objects, each object associated with a corresponding binary mask and control features.

Example 8. The method of any one or more of Examples 1-7, further comprising: pre-training the machine-learning model on a synthetic dataset comprising 3D-rendered images with diverse lighting and environmental conditions.

Example 9. The method of any one or more of Examples 1-8, wherein the UI includes options for enabling user control over the background layout and the lighting map.

Example 10. The method of any one or more of Examples 1-9, wherein the machine-learning model includes a CLIP (Contrastive Language-Image Pretraining) text encoder configured to align textual and visual features in a shared embedding space.

Example 11. A system comprising: a memory comprising instructions; and one or more computer processors, the instructions, when executed by the one or more computer processors, causing the system to perform operations comprising: obtaining a textual prompt and a foreground image of an object, the textual prompt describing a desired scene for placing the object in a result image; obtaining control features for creating the result image, the control features including the foreground image, a binary mask corresponding to the foreground image, a background layout representing structural composition of the desired scene, and a lighting map specifying direction and intensity of a light source; encoding the control features into a conditioning vector using a convolutional module initialized to zero weights; generating, but a machine-learning model, a synthetic image based on the textual prompt, the foreground image, the binary mask, the background layout, and the lighting map; applying a high-frequency overlay module to reintegrate high-frequency details from the foreground image into the synthetic image to obtain the result image; and causing presentation of the result image on a user interface (UI).

Example 12. The system of Example 11, wherein the instructions further cause the one or more computer processors to perform operations comprising: deriving the background layout from a reference image using edge detection techniques to capture structural features of the object.

Example 13. The system of any one or more of Examples 11-12, wherein the instructions further cause the one or more computer processors to perform operations comprising: generating the lighting map by analyzing a reference image to determine a direction and intensity of a light source, the lighting map being represented as a gradient.

Example 14. The system of any one or more of Examples 11-13, wherein the machine-learning model is a diffusion model configured to iteratively refine the synthetic image by removing noise from a latent representation.

Example 15. The system of any one or more of Examples 11-14, wherein the convolutional module is configured to encode the control features into a latent space compatible with the machine-learning model.

Example 16. A non-transitory machine-readable storage medium including instructions that, when executed by a machine, cause the machine to perform operations comprising: obtaining a textual prompt and a foreground image of an object, the textual prompt describing a desired scene for placing the object in a result image; obtaining control features for creating the result image, the control features including the foreground image, a binary mask corresponding to the foreground image, a background layout representing structural composition of the desired scene, and a lighting map specifying direction and intensity of a light source; encoding the control features into a conditioning vector using a convolutional module initialized to zero weights; generating, but a machine-learning model, a synthetic image based on the textual prompt, the foreground image, the binary mask, the background layout, and the lighting map; applying a high-frequency overlay module to reintegrate high-frequency details from the foreground image into the synthetic image to obtain the result image; and causing presentation of the result image on a user interface (UI).

Example 17. The non-transitory machine-readable storage medium of Example 16, wherein the machine further performs operations comprising: deriving the background layout from a reference image using edge detection techniques to capture structural features of the object.

Example 18. The non-transitory machine-readable storage medium of any one or more of Examples 16-17, wherein the machine further performs operations comprising: generating the lighting map by analyzing a reference image to determine a direction and intensity of a light source, the lighting map being represented as a gradient.

Example 19. The non-transitory machine-readable storage medium of any one or more of Examples 16-18, wherein the machine-learning model is a diffusion model configured to iteratively refine the synthetic image by removing noise from a latent representation.

Example 20. The non-transitory machine-readable storage medium of any one or more of Examples 16-19, wherein the convolutional module is configured to encode the control features into a latent space compatible with the machine-learning model.

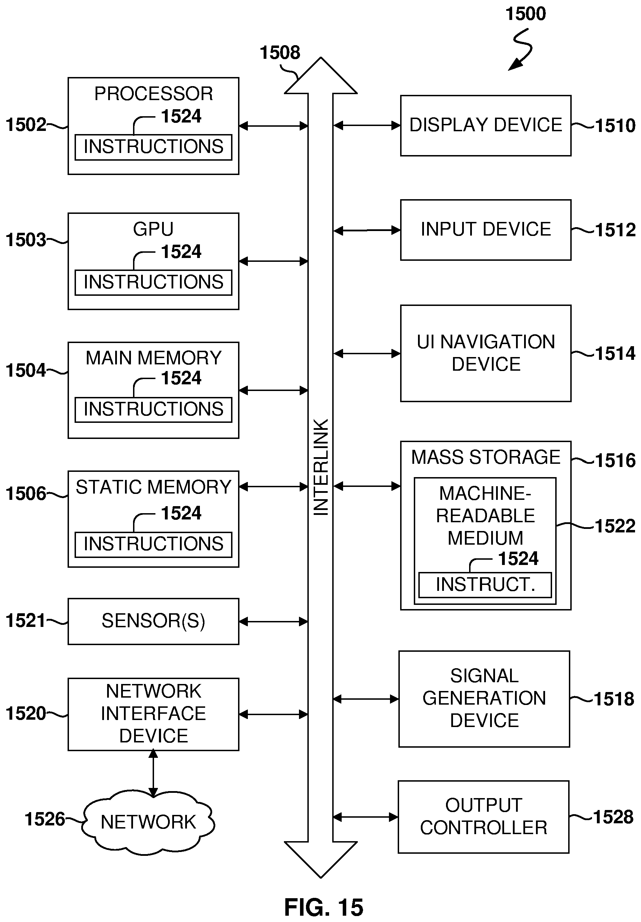

**Figure 15** is a block diagram illustrating an example of a machine 1500 upon by which one or more process examples described herein may be implemented or controlled. In alternative examples, the machine 1500 may operate as a standalone device or be connected (e.g., networked) to other machines. In a networked deployment, the machine 1500 may operate in the capacity of a server machine, a client machine, or both in server-client network environments. In an example, the machine 1500 may act as a peer machine in a peer-to-peer (P2P) (or other distributed) network environment. Further, while only a single machine 1500 is illustrated, the term "machine" shall also be taken to include any collection of machines that individually or jointly execute a set (or multiple sets) of instructions to perform any one or more of the methodologies discussed herein, such as via cloud computing, software as a service (SaaS), or other computer cluster configurations.

Examples, as recited herein, may include, or may operate by, logic, various components, or mechanisms. Circuitry is a collection of circuits implemented in tangible entities, including hardware (e.g., simple circuits, gates, logic). Circuitry membership may be flexible over time and underlying hardware variability. Circuitries include members that may, alone or in combination, perform specified operations when operating. In an example, the hardware of the circuitry may be immutably designed to carry out a specific operation (e.g., hardwired). In an example, the hardware of the circuitry may include variably connected physical components (e.g., execution units, transistors, simple circuits), including a computer-readable medium physically modified (e.g., magnetically, electrically, by moveable placement of invariant massed particles) to encode instructions of the specific operation. In connecting the physical components, the underlying electrical properties of a hardware constituent are changed (for example, from an insulator to a conductor or vice versa). The instructions enable embedded hardware (e.g., the execution units or a loading mechanism) to create members of the circuitry in hardware via the variable connections to carry out portions of the specific operation when in operation. Accordingly, the computer-readable medium is communicatively coupled to the other circuitry components when the device operates. In an example, any of the physical components may be used in more than one member of more than one circuitry. For example, under operation, execution units may be used in a first circuit of a first circuitry at one point in time and reused by a second circuit in the first circuitry or by a third circuit in a second circuitry at a different time.

The machine 1500 (e.g., computer system) may include a hardware processor 1502 (e.g., a central processing unit (CPU), a hardware processor core, or any combination thereof), a graphics processing unit (GPU 1503), a main memory 1504, and a static memory 1506, some or all of which may communicate with each other via an interlink 1508 (e.g., bus). The machine 1500 may further include a display device 1510, an alphanumeric input device 1512 (e.g., a keyboard), and a user interface (UI) navigation device 1514 (e.g., a mouse). In an example, the display device 1510, alphanumeric input device 1512, and UI navigation device 1514 may be a touch screen display. The machine 1500 may additionally include a mass storage device 1516 (e.g., drive unit), a signal generation device 1518 (e.g., a speaker), a network interface device 1520, and one or more sensors 1521, such as a Global Positioning System (GPS) sensor, compass, accelerometer, or another sensor. The machine 1500 may include an output controller 1528, such as a serial (e.g., universal serial bus (USB)), parallel, or other wired or wireless (e.g., infrared (IR), near field communication (NFC)) connection to communicate with or control one or more peripheral devices (e.g., a printer, card reader).

The processor 1502 refers to any one or more circuits or virtual circuits (e.g., a physical circuit emulated by logic executing on an actual processor) that manipulates data values according to control signals (e.g., commands, opcodes, machine code, control words, macroinstructions, etc.) and which produces corresponding output signals that are applied to operate a machine. A processor 1502 may, for example, include at least one of a Central Processing Unit (CPU), a Reduced Instruction Set Computing (RISC) Processor, a Complex Instruction Set Computing (CISC) Processor, a Graphics Processing Unit (GPU), a Digital Signal Processor (DSP), a Tensor Processing Unit (TPU), a Neural Processing Unit (NPU), a Vision Processing Unit (VPU), a Machine Learning Accelerator, an Artificial Intelligence Accelerator, an Application Specific Integrated Circuit (ASIC), a Field Programmable Gate Array (FPGA), a Radio-Frequency Integrated Circuit (RFIC), a Neuromorphic Processor, a Quantum Processor, or any combination thereof.

The processor 1502 may further be a multi-core processor having two or more independent processors (sometimes referred to as "cores") that may execute instructions contemporaneously. Multi-core processors contain multiple computational cores on a single integrated circuit die, each of which can independently execute program instructions in parallel. Parallel processing on multi-core processors may be implemented via architectures like superscalar, VLIW, vector processing, or SIMD that allow each core to run separate instruction streams concurrently. The processor 1502 may be emulated in software, running on a physical processor, as a virtual processor or virtual circuit. The virtual processor may behave like an independent processor but is implemented in software rather than hardware.

The mass storage device 1516 may include a machine-readable medium 1522 on which one or more sets of data structures or instructions 1524 (e.g., software) embodying or utilized by any of the techniques or functions described herein. The instructions 1524 may also reside, completely or at least partially, within the main memory 1504, within the static memory 1506, within the hardware processor 1502, or the GPU 1503 during execution thereof by the machine 1500. For example, one or any combination of the hardware processor 1502, the GPU 1503, the main memory 1504, the static memory 1506, or the mass storage device 1516 may constitute machine-readable media.

While the machine-readable medium 1522 is illustrated as a single medium, the term "machine-readable medium" may include a single medium or multiple media (e.g., a centralized or distributed database and associated caches and servers) configured to store one or more instructions 1524.

The terms "machine-readable medium," "computer-readable medium," and "device-readable medium" mean the same thing and may be used interchangeably in this disclosure. The terms are defined to include both machine-storage media and transmission media. Thus, the terms include both storage devices/media and carrier waves/modulated data signals.

The term "machine-readable medium" may include any medium that is capable of storing, encoding, or carrying instructions 1524 for execution by the machine 1500 and that causes the machine 1500 to perform any one or more of the techniques of the present disclosure or that is capable of storing, encoding, or carrying data structures used by or associated with such instructions 1524. Nonlimiting machine-readable medium examples may include solid-state memories and optical and magnetic media. For example, a massed machine-readable medium comprises a machine-readable medium 1522 with a plurality of particles having invariant (e.g., rest) mass. Accordingly, massed machine-readable media are not transitory propagating signals. Specific examples of massed machine-readable media may include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

As used herein, the terms "machine-storage medium," "device-storage medium," and "computer-storage medium" mean the same thing and may be used interchangeably in this disclosure. The terms refer to a single or multiple storage devices and/or media (e.g., a centralized or distributed database, and/or associated caches and servers) that store executable instructions and/or data. The terms shall accordingly be taken to include, but not be limited to, solid-state memories, and optical and magnetic media, including memory internal or external to processors. Specific examples of machine-storage media, computer-storage media, and/or device-storage media include non-volatile memory, including by way of example semiconductor memory devices, e.g., erasable programmable read-only memory (EPROM), electrically erasable programmable read-only memory (EEPROM), field-programmable gate arrays (FPGAs), and flash memory devices; magnetic disks such as internal hard disks and removable disks; magneto-optical disks; and CD-ROM and DVD-ROM disks. The terms "machine-storage medium," "computer-storage medium," and "device-storage medium" specifically exclude carrier waves, modulated data signals, and other such media.

The instructions 1524 may be transmitted or received over a communications network 1526 using a transmission medium via the network interface device 1520. The terms "transmission medium" and "signal medium" mean the same thing and may be used interchangeably in this disclosure. The terms "transmission medium" and "signal medium" shall be taken to include any intangible medium that is capable of storing, encoding, or carrying the instructions 1524 for execution by the machine 1500, and include digital or analog communications signals or other intangible media to facilitate communication of such software. Hence, the terms "transmission medium" and "signal medium" shall be taken to include any form of modulated data signal, carrier wave, and so forth. The term "modulated data signal" means a signal that has one or more of its characteristics set or changed in such a manner as to encode information in the signal.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented separately. These and other variations, modifications, additions, and improvements fall within the scope of the subject matter herein.

The examples illustrated herein are described in sufficient detail to enable those skilled in the art to practice the teachings disclosed. Other examples may be used and derived therefrom, such that structural and logical substitutions and changes may be made without departing from the scope of this disclosure. The Detailed Description, therefore, is not to be taken in a limiting sense, and the scope of various examples is defined only by the appended claims, along with the full range of equivalents to which such claims are entitled.

Additionally, as used in this disclosure, phrases of the form "at least one of an A, a B, or a C," "at least one of A, B, and C," and the like should be interpreted to select at least one from the group that comprises "A, B, and C." Unless explicitly stated otherwise in connection with a particular instance, in this disclosure, this manner of phrasing does not mean "at least one of A, at least one of B, and at least one of C." As used in this disclosure, the example "at least one of an A, a B, or a C" would cover any of the following selections: {A}, {B}, {C}, {A, B}, {A, C}, {B, C}, and {A, B, C}.

Moreover, plural instances may be provided for resources, operations, or structures described herein as a single instance. Additionally, boundaries between various resources, operations, modules, engines, and data stores are somewhat arbitrary, and particular operations are illustrated in the context of specific illustrative configurations. Other allocations of functionality are envisioned and may fall within the scope of various examples of the present disclosure. In general, structures and functionality are presented as separate resources in the example; configurations may be implemented as a combined structure or resource. Similarly, structures and functionality presented as a single resource may be implemented as separate resources. These and other variations, modifications, additions, and improvements fall within a scope of examples of the present disclosure as represented by the appended claims. Accordingly, the specification and drawings are to be regarded in an illustrative rather than a restrictive sense.

## Claims

1. A computer-implemented method comprising:
obtaining a textual prompt and a foreground image of an object, the textual prompt describing a desired scene for placing the object in a result image;
obtaining control features for creating the result image, the control features including the foreground image, a binary mask corresponding to the foreground image, a background layout representing structural composition of the desired scene, and a lighting map specifying direction and intensity of a light source;
encoding the control features into a conditioning vector using a convolutional module initialized to zero weights;
generating, but a machine-learning model, a synthetic image based on the textual prompt, the foreground image, the binary mask, the background layout, and the lighting map;
applying a high-frequency overlay module to reintegrate high-frequency details from the foreground image into the synthetic image to obtain the result image; and
causing presentation of the result image on a user interface (UI).

2. The method as recited in claim 1, further comprising:
deriving the background layout from a reference image using edge detection techniques to capture structural features of the object.

3. The method as recited in claim 1 or 2, further comprising:
generating the lighting map by analyzing a reference image to determine a direction and intensity of a light source, the lighting map being represented as a gradient.

4. The method as recited in any preceding claim, wherein the machine-learning model is a diffusion model configured to iteratively refine the synthetic image by removing noise from a latent representation.

5. The method as recited in any preceding claim, wherein the convolutional module is configured to encode the control features into a latent space compatible with the machine-learning model.

6. The method as recited in any preceding claim , wherein the high-frequency overlay module extracts high-frequency details from the foreground image, including text, edges, and intricate patterns, and the high-frequency overlay module overlays the high-frequency details onto the synthetic image.

7. The method as recited in any preceding claim, wherein the result image includes multiple objects, each object associated with a corresponding binary mask and control features.

8. The method as recited in any preceding claim, further comprising:
pre-training the machine-learning model on a synthetic dataset comprising 3D-rendered images with diverse lighting and environmental conditions.

9. The method as recited in any preceding claim, wherein the UI includes options for enabling user control over the background layout and the lighting map.

10. The method as recited in any preceding claim, wherein the machine-learning model includes a CLIP (Contrastive Language-Image Pretraining) text encoder configured to align textual and visual features in a shared embedding space.

11. A system comprising:
a memory comprising instructions; and
one or more computer processors, the instructions, when executed by the one or more computer processors, causing the system to perform operations comprising:
obtaining a textual prompt and a foreground image of an object, the textual prompt describing a desired scene for placing the object in a result image;
obtaining control features for creating the result image, the control features including the foreground image, a binary mask corresponding to the foreground image, a background layout representing structural composition of the desired scene, and a lighting map specifying direction and intensity of a light source;
encoding the control features into a conditioning vector using a convolutional module initialized to zero weights;
generating, but a machine-learning model, a synthetic image based on the textual prompt, the foreground image, the binary mask, the background layout, and the lighting map;
applying a high-frequency overlay module to reintegrate high-frequency details from the foreground image into the synthetic image to obtain the result image; and causing presentation of the result image on a user interface (UI).

12. A non-transitory machine-readable storage medium including instructions that, when executed by a machine, cause the machine to perform operations comprising:
obtaining a textual prompt and a foreground image of an object, the textual prompt describing a desired scene for placing the object in a result image;
obtaining control features for creating the result image, the control features including the foreground image, a binary mask corresponding to the foreground image, a background layout representing structural composition of the desired scene, and a lighting map specifying direction and intensity of a light source;
encoding the control features into a conditioning vector using a convolutional module initialized to zero weights;
generating, but a machine-learning model, a synthetic image based on the textual prompt, the foreground image, the binary mask, the background layout, and the lighting map;
applying a high-frequency overlay module to reintegrate high-frequency details from the foreground image into the synthetic image to obtain the result image; and
causing presentation of the result image on a user interface (UI).

13. The non-transitory machine-readable storage medium as recited in claim 12, wherein the machine further performs operations comprising:
deriving the background layout from a reference image using edge detection techniques to capture structural features of the object.

14. The non-transitory machine-readable storage medium as recited in claim 12 or 13, wherein the machine further performs operations comprising:
generating the lighting map by analyzing a reference image to determine a direction and intensity of a light source, the lighting map being represented as a gradient.

15. The non-transitory machine-readable storage medium as recited in any one of claims12 to 14, wherein the machine-learning model is a diffusion model configured to iteratively refine the synthetic image by removing noise from a latent representation, and/or
wherein the convolutional module is configured to encode the control features into a latent space compatible with the machine-learning model.
